# EUROPÄISCHE PATENTSCHRIFT

(11) **EP 0 349 473 B1**
(45) Veröffentlichungstag und Bekanntmachung des Hinweises auf die Patenterteilung: **14.06.1995**
(21) Anmeldenummer: 89710046.7
(22) Anmeldetag: 20.05.1989
(51) Int. Cl.: H01M 2/30, H01R 11/28

(54) **Batterie, insbesondere Starterbatterie für Kraftfahrzeuge**
Battery, particularly a car battery
Batterie, en particulier pour véhicules automobiles

(30) Priorität: 29.06.1988 DE 3821861
(43) Veröffentlichungstag der Anmeldung: 03.01.1990
(73) Patentinhaber: Accumulatorenwerke Hoppecke Carl Zoellner & Sohn GmbH & Co. KG, D-59914 Brilon (DE)
(72) Erfinder: Zoellner, Claus, D-5790 Brilon (DE); Bernardi, Walter, Dipl.-Ing., D-5790 Brilon (DE); Hampe, Werner, D-3538 Marsberg 12 (DE); Cramer, Wilhelm, D-5790 Brilon (DE)
(74) Vertreter: Stenger, Watzke & Ring Patentanwälte

(56) Entgegenhaltungen:
- EP-A- 0 158 682
- DE-U- 8 808 322
- FR-A- 639 061
- FR-A- 1 474 897
- GB-A- 2 038 533
- GB-A- 2 146 834
- GB-A- 2 183 081
- US-A- 2 058 787
- US-A- 2 444 046
- US-A- 3 370 988
- US-A- 3 625 774
- PATENT ABSTRACTS OF JAPAN, Band 10, Nr. 248 (E-431)[2304], 26. August 1986; & JP-A-61 78 054
- PATENT ABSTRACTS OF JAPAN, Band 12, Nr. 225 (E-626)[3072], 25. Juni 1988; & JP-A-63 19 756
- PATENT ABSTRACTS OF JAPAN, Band 9, Nr. 315 (E-365)[2038], 11. Dezember 1985; & JP-A-60 148 054

## Beschreibung

Die Erfindung betrifft eine Batterie, insbesondere Starterbatterie für Kraftfahrzeuge, mit einem Batteriegehäuse, durch das hindurch die Pole der Batterie nach außen hindurchgeführt sind, wobei die Pole jeweils mehrere mit dem Pol elektrisch verbundene elektrische Anschlüsse für ein Anschlußkabel aufweisen.

Im heutigen Kraftfahrzeugbau ist man bestrebt, insbesondere den positiven Pol der Starterbatterie mit mehr als einem elektrischen Anschluß zu versehen, um so einen direkten Anschluß diverser elektrischer Geräte zu ermöglichen. In Zukunft ist zu erwarten, daß noch mehr direkte elektrische Anschlüsse bei derartigen Starterbatterien benötigt werden. Darüber hinaus ist bei derartigen Starterbatterien für Kraftfahrzeuge der Zwang zur Automatisierung gefordert, d. h. die Batterie muß robotergerecht ausgebildet sein. Entsprechendes gilt für den negativen Pol (Masserückleitung) der Batterie, wo in Zukunft möglicherweise ebenfalls mehrere Anschlüsse gefordert sind.

Eine Batterie der eingangs angegebenen Art ist aus der GB-A-2 038 533 bekannt. Die in dieser Druckschrift offenbarte Batterie weist ein Batteriegehäuse auf, welches oberseitig durch einen Deckel abgeschlossen ist. Durch diesen Deckel sind die Pole der Batterie hindurchgeführt. Oberhalb des Deckels befinden sich Platten, die der Aufnahme von elektrischen Anschlüssen für Anschlußkabel dienen. Diese elektrischen Anschlüsse sind über Drähte mit den Polen verbunden.

Die vorbekannte Batterie weist den Nachteil auf, daß sie aufwendig zu fertigen ist. So muß zunächst der den Batterieinnenraum verschließende und die Pole aufweisende Batteriedeckel aufgesetzt werden, um anschließend zuerst die elektrischen Leitungen mit den Polen und den elektrischen Anschlüssen zu verbinden und danach die Platten oberhalb der Platte anzuordnen. Dies ist fertigungstechnisch aufwendig und hat darüber hinaus den Nachteil, daß bei einem Defekt der elektrischen Verdrahtung die gesamte Batterie unbrauchbar ist. Darüber hinaus bestehen bei der vorbekannten Batterie Platzprobleme, da die elektrischen Anschlüsse als mehrere, je einen Kontakt aufweisende Buchsen verteilt auf der Platte angeordnet sind. Als weiterer Nachteil der vorbekannten Batterie ist zu nennen, daß ein vollautomatisiertes Anschließen von Steckern an die Buchsen nicht möglich ist, da die elektrischen Anschlüsse aufweisende Platte bei der Montage der Batterie relativ zu der an der Batterie festgelegten Platte verschiebbar ist. Dadurch ist die Lage der elektrischen Anschlüsse relativ zu der Batterie nicht mit der für ein automatisiertes Einsetzen von Steckern in die Buchsen notwendigen Genauigkeit vorgegeben.

Davon ausgehend liegt der Erfindung die **Aufgabe** zugrunde, eine Batterie, insbesondere eine Starterbatterie für Kraftfahrzeuge, mit einem verbesserten elektrischen Anschluß für mehrere Anschlußkabel zu schaffen.

Als technische **Lösung** wird mit der Erfindung vorgeschlagen, daß die elektrischen Anschlüsse durch einen, mehrere Kontakte aufweisenden Stecker oder Buchse einer elektrischen Kabelsteckverbindung gebildet sind, wobei der Stecker oder die Buchse dieser elektrischen Kabelsteckverbindung im Batteriegehäuse integriert und fest verbunden ist.

Auf diese Weise ist ein Mehrfachsteckanschluß einer elektrischen Kabelsteckverbindung geschaffen, welcher eine technisch einfache Möglichkeit darstellt, um mehrere Anschlußkabel mit der Batterie zu kontaktieren. Die Anschlußkabel münden dabei in einer mit dem Stecker bzw. der Buchse der Batterie korrespondierenden, gemeinsamen Buchse bzw. Stecker der elektrischen Kabelsteckverbindung, so daß durch einfaches hineinstecken der Buchse bzw. des Steckers der Anschlußkabel in den Stecker bzw. in die Buchse der Batterie der elektrische Kontakt hergestellt ist. Dadurch werden sämtliche Anschlußkabel gleichzeitig mit der Batterie kontaktiert. Der Stecker oder die Buchse ist dabei ein fester Bestandteil des Batteriegehäuses und kann an beliebiger Stelle in diesem integriert sein. Da der Stecker bzw. die Buchse in dem Batteriegehäuse integriert und mit diesem fest verbunden ist, ist die Lage der Kontakte in Bezug auf die Gehäusegeometrie festgelegt, so daß bei einem vollautomatischen Anschließen der Anschlußkabel die genaue Lage der Steckkontakte exakt durch die Lage der Batterie vorgegeben ist. Ein vollautomatisches Anschließen der Steckkontakte ist somit möglich. Die elektrische Steckverbindung kann zusätzlich oder aber auch anstelle eines der beiden Pole vorgesehen sein.

Vorzugsweise ist der Stecker oder die Buchse der elektrischen Kabelsteckverbindung im Kunststoff des Batteriegehäuses eingebettet, wobei diese Einbettung während des Spritzvorganges des Batteriegehäuses erfolgen kann. Gleichzeitig mit dem Umspritzen des Steckers oder der Buchse kann das Umspritzen der elektrischen Verbindung zu dem Pol erfolgen.

Sofern die Batterie ein Batteriegehäuse mit einem Deckel aufweist, kann in einer bevorzugten Weiterbildung der Stecker oder die Buchse der elektrischen Kabelsteckverbindung im Bereich einer der Oberkanten des Batteriegehäuses fest im Deckel integriert sein. Die Steckrichtung der elektrischen Kabelsteckverbindung wird dann vorzugsweise parallel zur Oberseite der Batterie liegen. Die Herstellung einer derartigen Batterie, bei der der Stecker oder die Buchse im Deckel des Batteriegehäuses integriert ist, ist sehr einfach, indem vor dem aufsetzen des Deckels auf das eigentliche Batteriegehäuse dazwischen der Stecker oder die Buchse der elektrischen Kabelsteckverbindung sowie die entsprechende elektrische Verbindung zu dem Pol angeordnet und nach dem Aufsetzen des Deckels dieser mit dem Batteriegehäuse verschweißt wird, so daß der Stecker oder die Buchse fest zwischen dem Deckel und dem Batteriegehäuse festgelegt und in diesem integriert ist. Ist der Deckel ein sogenannter Blockdeckel, bestehend aus Unterdeckel und Oberdeckel, so kann der Stecker oder die Buchse der elektrischen Kabelsteckverbindung zwischen diesen beiden Deckelteilen festgelegt werden.

Alternativ dazu kann der Stecker oder die Buchse der elektrischen Kabelsteckverbindung in einer Seitenwand des Batteriegehäuses fest integriert sein. Dies hat den Vorteil, daß der Deckel der Batterie frei von sämtlichen elektrischen Anschlüssen ist. Allerdings besitzt das Batteriegehäuse etwas größere Abmessungen, wenn der Stecker oder die Buchse auskragend an der Seitenwand des Batteriegehäuses angeordnet ist.

In einer technischen Realisierung dieser Ausführungsform weist die Seitenwand des Batteriegehäuses ein auskragendes, angeformtes Aufnahmegehäuse auf, in das der Stecker oder die Buchse der elektrischen Kabelsteckverbindung einsetzbar und darin festlegbar ist.

Für die beiden Pole der Batterie kann auch ein sogenannter Einheitsanschluß vorgesehen werden, indem in einer Weiterbildung für beide Pole der Batterie ein gemeinsamer Stecker oder eine gemeinsame Buchse der elektrischen Kabelsteckverbindung vorgesehen ist. Dieser Einheitsanschluß ist besonders robotertauglich.

In einer ersten Ausführungsform kann die elektrische Verbindung zwischen dem Pol und dem Stecker oder der Buchse der elektrischen Kabelsteckverbindung durch ein Kabel oder ein Flachbandkabel gebildet sein. Dies stellt eine technisch sehr einfache Möglichkeit für die elektrische Zuleitung von dem Pol zu dem entsprechenden Stecker oder der entsprechenden Buchse dar.

Dabei kann das dem Pol zugeordnete Ende des Kabels oder des Flachbandkabels mit einem an der zylindrischen Umfangswand des Pols befestigten, korrespondierend bogenförmig ausgebildeten Befestigungselement versehen sein, wobei der Pol eine zu dem Befestigungselement korrespondierende Aussparung zu dessen Aufnahme aufweist. Dabei kann das bogenförmige Befestigungselement beispielsweise am Pol angelötet sein. Auch ist es denkbar, als Befestigungselement eine am Pol aufsteckbare Klammer vorzusehen. Alternativ dazu kann das dem Pol zugeordnete Ende des Kabels oder des Flachbandkabels ein massives Anschlußstück aus Metall aufweisen, das auf den Pol aufgesteckt und mit diesem verschweißt ist. Dabei ist bei dieser alternativen Befestigungsart vorzugsweise zwischen dem Batteriegehäuse und dem Pol eine diese umgebende sowie mit dem Batteriegehäuse formschlüssig verbundene Poldurchführungshülse aus Metall angeordnet, auf die das Anschlußstück aus Metall aufgesteckt ist und wobei der Pol, die Poldurchführungshülse sowie das Anschlußstück miteinander verschweißt sind. Dies stellt eine sehr sichere und dauerhafte Verbindung zwischen dem Stecker oder der Buchse der elektrischen Kabelsteckverbindung und dem Pol dar.

In einer zweiten Ausführungsform der elektrischen Verbindung zwischen dem Pol und dem Stecker der elektrischen Kabelsteckverbindung wird vorgeschlagen, daß diese durch eine Metallplatte gebildet ist.

Vorzugsweise ist die elektrische Verbindung zwischen dem Pol und dem Stecker oder der Buchse der elektrischen Kabelsteckverbindung im Kunststoff des Batteriegehäuses eingebettet. Dies hat zum einen den Vorteil, daß die elektrische Verbindung während des Spritzens des Batteriegehäuses von dem Kunststoff umspritzt werden kann. Zum anderen ist die elektrische Verbindung durch die Einbettung im Kunststoff des Batteriegehäuses vor Umwelteinflüssen geschützt.

Alternativ dazu kann die elektrische Verbindung zwischen dem Pol und der Buchse der elektrischen Kabelsteckverbindung vorzugsweise in der Oberseite des Batteriegehäuses eingelegt und dort fixiert sein. Dies gilt insbesondere bei der Verwendung eines Flachbandkabels. In diesem Fall ist die Oberseite des Batteriegehäuses mit einer kanalförmigen Ausnehmung zu versehen, die das Flachbandkabel aufnimmt. Die Fixierung kann mittels einer Klemme erfolgen. Auch die Verlötung ist denkbar.

Ausgehend von einer Starterbatterie für Kraftfahrzeuge wird in einer bevorzugten Weiterbildung vorgeschlagen, daß zusätzlich zu dem Stecker oder der Buchse der elektrischen Kabelsteckverbindung eine Metallhülse zum elektrischen Kontaktieren eines Starterkabels für das Kraftfahrzeug vorgesehen ist. Eine derartige Metallhülse bildet eine einfache Steckverbindung für das Starterkabel, so daß ein einfacher robotertauglicher Anschluß möglich ist. Die Metallhülse kann dabei die Ausbildung des Poles in der herkömmlichen Weise entbehrlich machen, so daß lediglich eine elektrisch leitenden Durchführung durch das Batteriegehäuse erforderlich ist.

In einer bevorzugten Weiterbildung dieser Starterbatterie kann der Stecker oder die Buchse der elektrischen Kabelsteckverbindung sowie der Metallhülse für das Starterkabel in einem gemeinsamen Gehäuse angeordnet sein. Dies stellt einen sehr kompakten elektrischen Anschluß an die Starterbatterie dar.

Als dritte Ausführungsform der elektrischen Verbindung zwischen dem Pol und dem Stecker oder der Buchse der elektrischen Kabelsteckverbindung sowie gegebenenfalls der Metallhülse kann ein im Batteriegehäuse eingebetteter Metallkörper vorgesehen sein, in dem die Metallhülse gegebenenfalls eingebettet ist. Ein derartiger Metallkörper hat den Vorteil, daß er auf technisch sehr einfache Weise innerhalb der Batteriegehäuses eingebettet werden kann, indem er als vorgefertigtes Teil während des Spritzvorganges des Batteriegehäuses vom Kunststoff umspritzt wird. Insbesondere kann der Metallkörper, der beispielsweise aus Blei bestehen kann, im Deckel des Batteriegehäuses angeordnet sein. Durch das Einbetten der Metallhülse für das Starterkabel wird insbesondere ein einstückiges Teil geschaffen, das sehr leicht handhabbar ist. Der Metallkörper ist dabei vorzugsweise mit dem Pol der Batterie verschweißt, so daß ein einwandfrier elektrischer Kontakt gewährleistet ist.

Weiterhin wird eine Ausführungsform einer Batterie vorgeschlagen, bei der der Stecker oder die Buchse der elektrischen Kabelsteckverbindung ein vorgefertigtes Stecker- oder Buchsenbauteil ist, das in das Batteriegehäuse unter Herstellung der elektrischen Verbindung zum Pol einsetzbar ist. Ein derartiges vorgefertigtes Stecker- oder Buchsenbauteil hat den Vorteil, daß es als separates Bauteil hergestellt werden kann, das je nach Bedarf in das Batteriegehäuse eingesetzt wird und so der Stecker oder die Buchse der elektrischen Kabelsteckverbindung im Batteriegehäuse integriert ist. Die Möglichkeit der nachträglichen Montage des Steckers oder der Buchse der elektrischen Kabelsteckverbindung ist dabei außerordentlich gut für eine Robotermontage geeignet. Darüber hinaus hat diese Ausführungsform den Vorteil, daß je nach Bedarf unterschiedliche Stecker- oder Buchsenbauteile im Batteriegehäuse eingesetzt werden können.

In einer Weiterbildung dieser Ausführungsform wird vorgeschlagen, daß für die Herstellung der elektrischen Verbindung im Batteriegehäuse ein mit dem jeweiligen Pol elektrisch verbundener elektrischer Kontaktstift fest angeordnet ist und das vorgefertigte Stecker- oder Buchsenbauteil eine dazu korrespondierende elektrische Kontaktbuchse aufweist. Dies stellt eine technisch sehr einfache und vor allem roboterfreundliche Möglichkeit zur Herstellung der elektrischen Verbindung zwischen den Polen und dem Stecker- oder Buchsenbauteil dar.

Zur Sicherung des Stecker- oder Buchsenbauteils im Batteriegehäuse wird in einer Weiterbildung eine zwischen dem Batteriegehäuse und dem vorgefertigten Stecker- oder Buchsenbauteil angeordnete Rasteinrichtung vorgeschlagen, die beispielsweise ein Klemmbügel sein kann.

Schließlich wird eine Ausführungsform einer Batterie vorgeschlagen, bei der der elektrische Anschluß durch einen mit dem Pol elektrisch verbundenen Draht gebildet ist, auf dem einzelne mit ihm elektrisch verbundene Stecker oder Buchsen des elektrischen Anschlusses für die Kontaktierung jeweils eines Anschlußkabels angeordnet sind. Auf diese Weise wird ein technisch überaus einfacher sowie im Batteriegehäuse der Batterie integrierter elektrischer Mehrfachanschluß geschaffen, der lediglich aus einem mit dem Pol der Batterie zu verbindenden Draht und den Anschlußbolzen für die Stecker oder Buchsen für die elektrische Kontaktierung jeweils eines Anschlußkabels besteht. Durch ein einfaches Biegen des Drahtes ist auf technisch einfache Weise eine Anordnung der Stecker oder Buchsen entsprechend den Erfordernissen möglich. Durch lediglich zwei unterschiedliche Bauteile, nämlich einem Draht und bolzenähnlichen Steckern oder Buchsen, lassen sich auf überaus variable Weise die unterschiedlichsten Zusatzanschlüsse der Batterie schaffen, die darüber hinaus sicher und einfach am Batteriepol angeschlossen sind.

Die Stecker oder Buchsen sind als Einzelstecker oder Einzelbuchsen auszubilden, an denen jeweils ein Anschlußkabel angeschlossen wird, doch können in einer Weiterbildung mehrere der Einzelstecker oder Einzelbuchsen zu einer Baugruppe zusammengefaßt sein. Beispielsweise können die Stecker oder Buchsen durch einen gemeinsamen Block zusammengefaßt sein, der am Draht befestigt ist.

Vorzugsweise ist der Draht ein Runddraht insbesondere aus Messing.

In einer bevorzugten Weiterbildung weist der Draht eine Bohrung auf, in die der Draht für die elektrische Verbindung hineingesteckt ist. Die Aufnahme des Drahtes in einer derartigen in Pol ausgebildeten Bohrung stellt eine technisch einfache und zuverlässige Maßnahme dar, um den Draht sowohl mechanisch als auch elektrisch mit dem Batteriepol zu verbinden. Die endgültige Verbindung des Drahtes mit dem Pol kann dabei beispielsweise durch Vergießen mit Zinn erfolgen.

Eine weitere bevorzugte Weiterbildung schlägt vor, daß die einzelnen Stecker oder Buchsen jeweils eine Bohrung aufweisen, mittels denen sie auf den Draht hintereinander aufgesteckt sind. Diese Anordnung der Stecker oder Buchsen, indem diese gewissermaßen wie die Perlen auf einer Schnur auf dem Draht aufgereiht sind, stellt eine technisch einfache Möglichkeit zur Befestigung der bolzenartigen Stecker oder Buchsen am Draht dar, wobei nach dem Auffädeln die Stecker oder Buchsen vorzugsweise mit dem Draht weicht verlötet werden, um so eine einwandfreie elektrische Kontaktierung herzustellen.

Um die Stecker oder Buchsen in der richtigen Lage auf dem Draht positionieren zu können, wird in einer Weiterbildung eine Zentrierplatte vorgeschlagen, mittels der die Stecker oder Buchsen in ihrer vorgegebenen Position gehalten werden, um sie anschließend mit dem Draht zu verlöten.

In einer Weiterbildung ist der Draht mit seinen Steckern oder Buchsen im Kunststoff des Batteriegehäuses, insbesondere in dessen Deckel eingebettet. Dies stellt eine einfache Möglichkeit zum Integrieren des elektrischen Anschlusses im Batteriegehäuse und insbesondere in dessen Deckel dar, indem der elektrische Anschluß mit seinem Draht und mit seinen Steckern oder Buchsen entsprechend mit Kunststoff umspritzt wird. Sofern Stecker vorgesehen sind, ragen diese dann über die Oberseite des Batteriegehäuses bzw. über die Oberseite des Batteriedeckels. Sofern es sich bei den elektrischen Anschlüssen um Buchsen handelt, können diese mehr oder weniger versenkt im Batteriegehäuse eingebettet sein, so daß durch Einführen eines entsprechenden Steckers des Anschlußkabels dieses mit der Buchse kontaktiert werden kann.

Um eine optimale Verankerung des bolzenartigen Steckers oder der bolzenartigen Buchse im Kunststoffmaterial zu gewährleisten, weisen die Stecker oder Buchsen im im Kunststoff eingebetteten Bereich vorzugsweise eine unrunde Außenkontur auf, die beispielsweise eine Rändelung sein kann. Dies erweist sich insbesondere dann von Vorteil, wenn der Stecker ein Schraubgewinde zum Aufschrauben des Anschlußkabels aufweist, so daß die Anschraubmomente von der Kunststoffumspritzung aufgefangen werden.

In einer bevorzugten Weiterentwicklung der Stecker oder Buchsen sind diese vorzugsweise Drehteile insbesondere aus Rundmessing, so daß die bereits erwähnten elektrischen Anschlußbolzen auf technisch einfache Weise geschaffen sind.

Um eine einfache Kontaktierung des jeweiligen Anschlußkabels am Stecker zu gewährleisten, weist dieses vorzugsweise ein Schraubgewinde auf.

Weitere Einzelheiten, Merkmale und Vorteile ergeben sich aus der nachfolgenden Beschreibung der zugehörigen Zeichnungen, in denen verschiedene Ausführungsformen einer erfindungsgemäßen Batterie schematisch dargestellt sind. In den Zeichnungen zeigt:
- Fig. 1: eine Vorderansicht einer ersten Ausführungsform einer Batterie im Bereich des Deckels;
- Fig. 2: eine Draufsicht auf die Batterie in Fig. 1;
- Fig. 3: eine teilweise entlang der Linie III-III in Fig. 4 geschnittene Vorderansicht einer zweiten Ausführungsform einer Batterie;
- Fig. 4: eine Draufsicht auf die Batterie in Fig. 3;
- Fig. 5: eine teilweise Vorderansicht einer dritten Ausführungsform einer Batterie;
- Fig. 6: eine Draufsicht auf die Batterie in Fig. 5, wobei im Bereich des Poles der Deckel weggebrochen ist;
- Fig. 7: einen Schnitt entlang der Linie VII-VII in Fig. 6;
- Fig. 8: eine teilweise Seitenansicht einer vierten Ausführungsform einer Batterie;
- Fig. 9: einen Schnitt entlang der Linie IX-IX in Fig. 8;
- Fig. 10: eine teilweise Vorderansicht einer fünften Ausführungsform einer Batterie, wobei die linke Hälfte entlang der Linie X - X in Fig. 11 geschnitten ist;
- Fig. 11: eine Draufsicht auf die Batterie in Fig. 10.

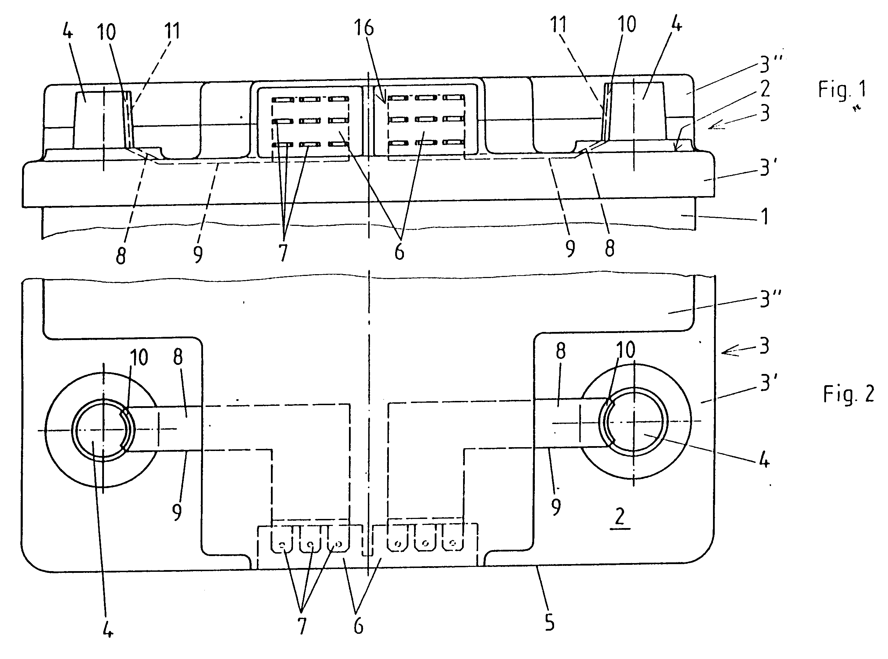

Eine erste Ausführungsform einer Batterie ist in den Fig. 1 und 2 dargestellt. Die Batterie weist ein Batteriegehäuse 1 auf, auf dessen Oberseite 2 ein Deckel 3, bestehend aus einem Unterdeckel 3′ sowie aus einem Oberdeckel 3˝, aufgeschweißt ist. Sowohl beim Batteriegehäuse 1 als auch beim Deckel 3 handelt es sich um Kunststofformteile. Durch die Oberseite 2 des Batteriegehäuses 1 und dabei insbesondere durch den Unterdeckel 3′ sind die beiden Pole 4 der Batterie in Form von sogenannten Endpolen hindurchgeführt.

Zwischen dem Unterdeckel 3′ und dem Oberdeckel 3˝ des Deckels 3 ist im Bereich der vorderen Oberkante 5 ein Stecker 6 einer elektrischen Kabelsteckverbindung festgelegt und somit im Deckel 3 des Batteriegehäuses 1 integriert. Wie zu erkennen ist, besitzt dieser Stecker 6 elektrische Kontakte 7, und zwar jeweils neun für jeden Pol 4.

Zwischen den Polen 4 und den Kontakten 7 des Steckers 6 ist jeweils eine elektrische Verbindung in Form eines Flachbandkabels 8 hergestellt. Das in der Zeichnung linke Flachbandkabel 8 verbindet dabei den linken Pol 4 mit den neun auf der linken Seite des Steckers 6 angeordneten Kontakten 7, während das rechte Flachbandkabel 8 die elektrische Verbindung auf der rechten Seite herstellt. Die Flachbandkabel 8 sind dabei in einer Ausnehmung 9 in der Oberseite 2 des Unterdeckels 3′ verlegt. Die Kontaktierung der Flachbandkabel 8 mit den Polen 4 erfolgt über bogenförmige Befestigungselemente 10, die an der zylindrischen Umfangswand der Pole 4 angelötet sind. Zur besseren Fixierung weisen die Pole 4 zu den Befestigungselementen 10 korrespondierende Aussparungen 11 auf.

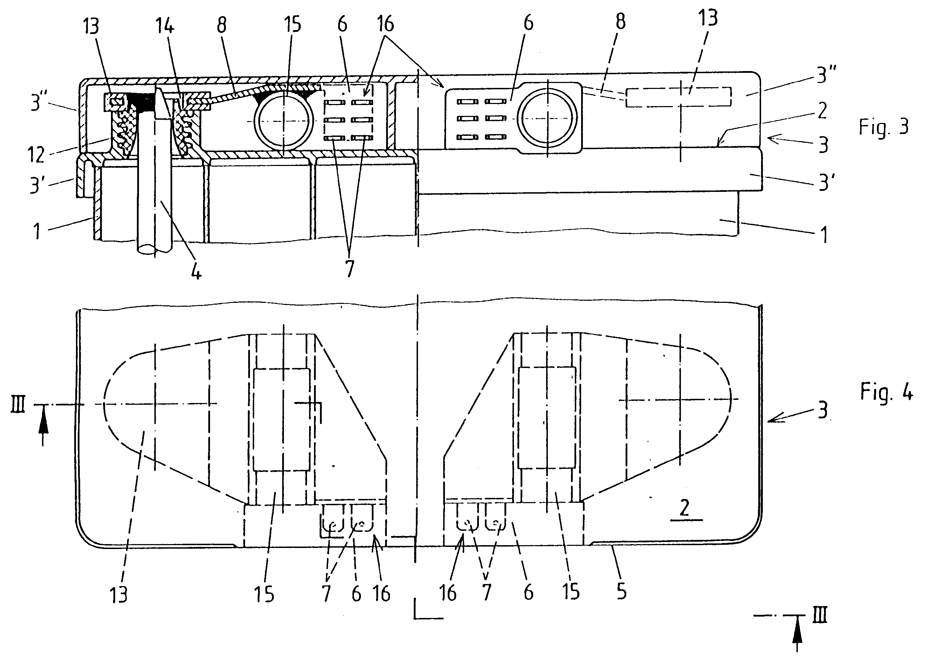

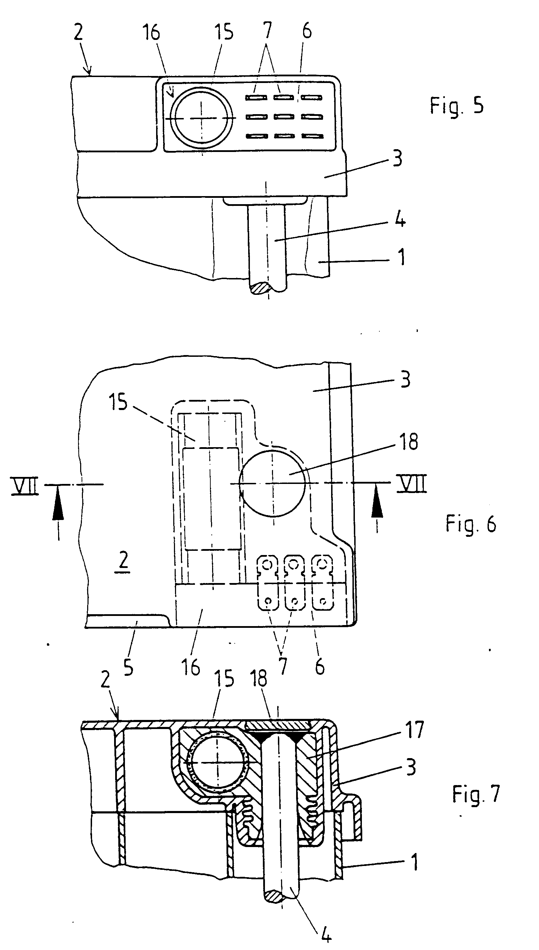

Die in den Fig. 3 und 4 dargestellte zweite Ausführungsform einer Batterie besteht ebenfalls aus einem Batteriegehäuse 1, auf das ein Deckel 3 aufgeschweißt ist. Wie in Fig. 3 zu erkennen ist, ist der Stecker 6 zwischen dem Oberdeckel 3˝ und dem Unterdeckel 3′ des Deckels 3 festgelegt. Die Verbindung zwischen dem Stecker 6 und dem Pol 4 wird ebenfalls durch ein Flachbandkabel 8 hergestellt. Dieses ist über eine besondere Konstruktion elektrisch mit dem Pol 4 verbunden.

Im Unterdeckel 3′ des Deckels 3 ist formschlüssig eine Poldurchführungshülse 12 angeordnet. Diese ragt über die Oberseite des Unterdeckels 3′. Durch diese Poldurchführungshülse 12 hindurch ist der Pol 4 geführt. Das Ende des Flachbandkabels 8 ist mit einem starren, flachen Anschlußstück 13 aus Metall versehen, das eine Bohrung 14 aufweist. Mittels dieser Bohrung 14 ist das Anschlußstück 13 auf die Poldurchführungshülse 12 aufgesteckt. Nach dem Aufstecken werden das Anschlußstück 13, die Poldurchführungshülse 12 sowie der Pol 4 miteinander verschweißt. Dies ist in Fig. 3 in der linken Hälfte des Poles 4 dargestellt und zu erkennen. Auf der rechten Seite ist die Situation vor dem Verschweißen dargestellt.

Zusätzlich ist auf das Flachbandkabel 8 eine Metallhülse 15 aufgeschweißt. Diese Metallhülse 15 dient zum Kontaktieren eines Starterkabels. Die Sicherung zum Fixieren des Starterkabels innerhalb der Metallhülse 15 ist nicht dargestellt. Der Stecker 6 sowie die Metallhülse 15 sind in einem gemeinsamen Gehäuse 16 angeordnet und bilden somit einen kompakten elektrischen Anschluß an den jeweiligen Pol 4 der Batterie.

Eine dritte Ausführungsform einer Batterie ist in den Fig. 5 bis 7 dargestellt. Diese unterscheidet sich von den vorhergehenden beiden Ausführungsformen dadurch, daß als elektrische Verbindung zwischen dem Pol 4 und dem Stecker 6 ein Metallkörper 17 beispielsweise aus Blei vorgesehen ist, der in dem Deckel 3 des Batteriegehäuses 1 eingebettet ist. Der Metallkörper 17 kann dabei als vorgefertigtes Teil durch den Deckel 3 des Batteriegehäuses 1 entsprechend umspritzt werden. Zusätzlich ist innerhalb des Metallkörpers 17 die Metallhülse 15 für den Anschluß eines Starterkabels eingebettet. Der den Metallkörper 17 durchragende Pol 4 der Batterie ist am oberen Ende mit dem Metallkörper 17 verschweißt. Ein Stopfen 18 verschließt den Deckel 3.

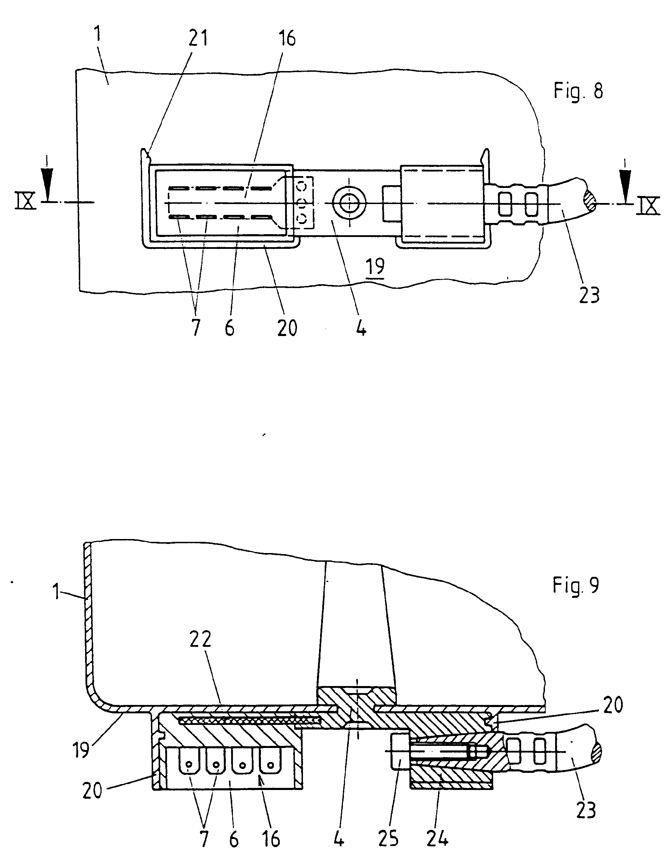

Die vierte Ausführungsform, die in den Fig. 8 und 9 dargestellt ist, unterscheidet sich von den drei vorhergehenden Ausführungsformen in der Anordnung des Steckers 6 in der Seitenwand 19 des Batteriegehäuses. Zur Fixierung des Steckers 6 ist dabei ein Aufnahmegehäuse 20 an der Seitenwand 19 des Batteriegehäuses 1 angeformt. In dieses Aufnahmegehäuse 20 wird von oben der Stecker 6 eingesetzt, wobei die Fixierung mittels einer Rastnase 21 erfolgt. Die elektrische Verbindung zwischen dem Pol 4 und dem Stecker 6 wird durch eine Metallplatte 22 beispielsweise aus Kupfer hergestellt, die in entsprechende Schlitze sowohl im Pol 4 als auch im Stecker 6 einschiebbar ist.

Auf der anderen Seite des Steckers 6 ist eine Kontaktiereinrichtung für ein Starterkabel 23 vorgesehen. Diese besteht aus einer konusförmigen Hülse 24, die einstückig mit dem Pol 4 ausgebildet ist. In diese konusförmige Hülse 24 ist (in der Zeichnung von rechts) das Starterkabel 23 eingeschoben. Eine von der anderen Seite her eingeschraubte Schraube 25 drückt das Ende des Starterkabels 23 gegen die Innenwandung der Hülse 24.

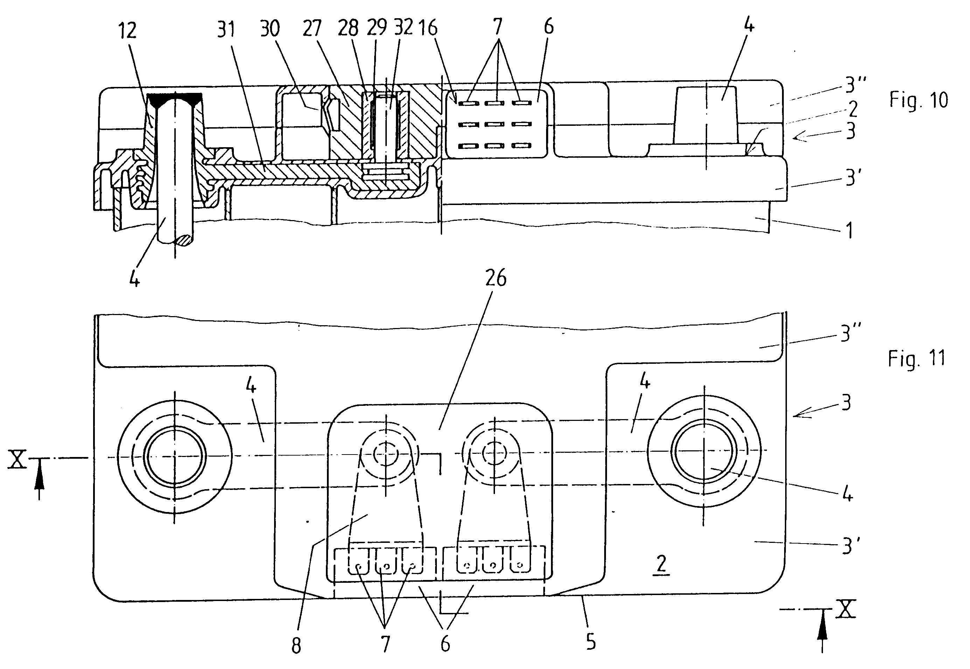

In den Fig. 10 und 11 ist schließlich die fünfte Ausführungsform einer Batterie dargestellt. Bei dieser Ausführungsform ist der Stecker 6 durch ein separat vorgefertigtes Steckerbauteil 26 gebildet, das in den Deckel 3 des Batteriegehäuses 1 einsetzbar ist. Das Steckerbauteil 26 besteht dabei aus einem Kunststofformteil 27, das das Gehäuse für die elektrischen Anschlüsse bildet. In diesem Kunststofformteil 27 sind einerseits die Kontakte 7 des Steckers 6 sowie andererseits die Elemente zur Herstellung der elektrischen Verbindung zu den Polen 4 angeordnet. Letztere bestehen aus einer elektrischen Kontaktbuchse 28, die um den Innenumfang herum mit Kontaktlamellen 29 versehen ist. An der Außenseite ist das Kunststofformteil 27 des Steckerbauteils 26 mit Klemmbügeln 30 versehen, die nach Einsetzen in den Deckel 3 in diesem einrasten und somit das Steckerbauteil 26 im Batteriegehäuse 1 fixieren.

Ebenso wie bei der in Fig.3 und 4 dargestellten Ausführungsform sind bei dieser fünften Ausführungsform im Unterdeckel 3′ des Deckels 3 formschlüssig Poldurchführungshülsen 12 angeordnet, die über die Oberseite des Unterdeckels 3′ ragen und durch die hindurch die Pole 4 geführt sind. Wie in Fig.10 zu erkennen ist, sind die Poldurchführungshülsen 12 mit den Polen 4 zur Herstellung der elektrischen Verbindung miteinander verschweißt. Im unteren Bereich der Poldurchführungshülsen 12 ist jeweils ein massives Verbindungsstück 31 einstückig angeformt und fest im Deckel 3 eingebettet. Am dem Steckerbauteil 26 zugeordneten Ende ist in dem Verbindungsstück 31 jeweils ein elektrischer Kontaktstift 32 eingegossen, der senkrecht nach oben ragt. Dieser Kontaktstift 32 korrespondiert mit der entsprechenden Kontaktbuchse 28 im Steckerbauteil 26, so daß nach Aufstecken des Steckerbauteils 26 auf die Kontaktstifte 32 der elektrische Kontakt hergestellt ist, wobei dies durch die Kontaktlamellen 29 unterstützt wird.

Bei sämtlichen Auführungsformen der Batterie ist der Stecker 6 der elektrischen Kabelsteckverbindung innerhalb des Batteriegehäuses 1 bzw. in dessen Deckel 3 fest integriert, so daß der Stecker 6 der elektrischen Kabelsteckverbindung ein fester Bestandteil der Batterie ist. Auf diese Weise ist ein Mehrfachsteckanschluß realisiert.

### Bezugszeichenliste

- 1: Batteriegehäuse
- 2: Oberseite
- 3: Deckel
- 3′: Unterdeckel
- 3˝: Oberdeckel
- 4: Pol
- 5: Oberkante
- 6: Stecker
- 7: Kontakt
- 8: Flachbandkabel
- 9: Ausnehmung
- 10: Befestigungselement
- 11: Aussparung
- 12: Poldurchführungshülse
- 13: Anschlußstück
- 14: Bohrung
- 15: Metallhülse
- 16: Gehäuse
- 17: Metallkörper
- 18: Stopfen
- 19: Seitenwand
- 20: Aufnahmegehäuse
- 21: Rastnase
- 22: Metallplatte
- 23: Starterkabel
- 24: Hülse
- 25: Schraube
- 26: Steckerbauteil
- 27: Kunststofformteil
- 28: Kontaktbuchse
- 29: Kontaktlamelle
- 30: Klemmbügel
- 31: Verbindungsstück
- 32: Kontaktstift

## Patentansprüche

1. Batterie, insbesondere Starterbatterie für Kraftfahrzeuge, mit einem Batteriegehäuse (1), durch das hindurch die Pole (4) der Batterie nach außen hindurchgeführt sind, wobei die Pole (4) jeweils mehrere mit dem Pol (4) elektrisch verbundene elektrische Anschlüsse für ein Anschlußkabel aufweisen,
**dadurch gekennzeichnet**,
daß die elektrischen Anschlüsse durch einen, mehrere Kontakte (7) aufweisenden Stecker (6) oder Buchse einer elektrischen Kabelsteckverbindung gebildet sind, wobei der Stecker (6) oder die Buchse dieser elektrischen Kabelsteckverbindung im Batteriegehäuse (1) integriert und fest verbunden ist.

2. Batterie nach Anspruch 1, dadurch gekennzeichnet, daß der Stecker (6) oder die Buchse der elektrischen Kabelsteckverbindung im Kunstoff des Batteriegehäuses (1) eingebettet ist.

3. Batterie nach einem der Ansprüche 1 bis 2, wobei das Batteriegehäuse (1) einen Deckel (3) aufweist, dadurch gekennzeichnet, daß der Stecker (6) oder die Buchse der elektrischen Kabelsteckverbindung im Bereich einer der Oberkanten (5) des Batteriegehäuses (1) fest im Deckel (3) integriert ist.

4. Batterie nach einem der Ansprüche 1 bis 2, dadurch gekennzeichnet, daß der Stecker (6) oder die Buchse der elektrischen Kabelsteckverbindung in einer Seitenwand (19) des Batteriegehäuses (1) fest integriert ist.

5. Batterie nach Anspruch 4, dadurch gekennzeichnet, daß die Seitenwand (19) des Batteriegehäuses (1) ein auskragendes, angeformtes Aufnahmegehäuse (20) aufweist, in das der Stecker (6) oder die Buchse der elektrischen Kabelsteckverbindung einsetzbar und darin festlegbar ist.

6. Batterie nach einem der Ansprüche 1 bis 5, dadurch gekennzeichnet, daß für beide Pole (4) der Batterie ein gemeinsamer Stecker (6) oder eine gemeinsame Buchse der elektrischen Kabelsteckverbindung vorgesehen ist.

7. Batterie nach einem der Ansprüche 1 bis 6, dadurch gekennzeichnet, daß die elektrische Verbindung zwischen dem Pol (4) und dem Stecker (6) oder der Buchse der elektrischen Kabelsteckverbindung durch ein Kabel oder ein Flachbandkabel (8) gebildet ist.

8. Batterie nach Anspruch 7, dadurch gekennzeichnet, daß das dem Pol (4) zugeordnete Ende des Kabels oder des Flachbandkabels (8) mit einem an der zylindrischen Umfangswand des Pols (4) befestigten, korrespondierend bogenförmig ausgebildeten Befestigungselement (10) versehen ist, wobei der Pol (4) eine zu dem Befestigungselement (10) korrespondierende Aussparung (11) zu dessen Aufnahme aufweist.

9. Batterie nach Anspruch 7, dadurch gekennzeichnet, daß das dem Pol (4) zugeordnete Ende des Kabels oder des Flachbandkabels (8) ein massives Anschlußstück (13) aus Metall aufweist, das auf den Pol (4) aufgesteckt und mit diesem verschweißt ist.

10. Batterie nach Anspruch 9, dadurch gekennzeichnet, daß zwischen dem Batteriegehäuse (1) und dem Pol (4) eine diese umgebende sowie mit dem Batteriegehäuse (1) formschlüssig verbundene Poldurchführungshülse (12) aus Metall angeordnet ist, auf die das Anschlußstück (13) aus Metall aufgesteckt ist und wobei der Pol (4), die Poldurchführungshülse (12) sowie das Anschlußstück (13) miteinander verschweißt sind.

11. Batterie nach einem der Ansprüche 1 bis 6, dadurch gekennzeichnet, daß die elektrische Verbindung zwischen dem Pol (4) und dem Stecker (6) oder der Buchse der elektrischen Kabelsteckverbindung durch eine Metallplatte (22) gebildet ist.

12. Batterie nach einem der Ansprüche 1 bis 11, dadurch gekennzeichnet, daß die elektrische Verbindung zwischen dem Pol (4) und dem Stecker (6) oder der Buchse der elektrischen Kabelsteckverbindung im Kunststoff des Batteriegehäuses (1) eingebettet ist.

13. Batterie nach einem der Ansprüche 1 bis 11, dadurch gekennzeichnet, daß die elektrische Verbindung zwischen dem Pol (4) und dem Stecker (6) oder der Buchse der elektrischen Kabelsteckverbindung im Batteriegehäuse (1) eingelegt und dort fixiert ist.

14. Starterbatterie für Kraftfahrzeuge nach einem der Ansprüche 1 bis 13, dadurch gekennzeichnet, daß zusätzlich zu dem Stecker (6) oder der Buchse der elektrischen Kabelsteckverbindung eine Metallhülse (15) zum elektrischen Kontaktieren eines Starterkabels für das Kraftfahrzeug vorgesehen ist.

15. Starterbatterie nach Anspruch 14, dadurch gekennzeichnet, daß der Stecker (6) oder die Buchse der elektrischen Kabelsteckverbindung sowie die Metallhülse (15) für das Starterkabel in einem gemeinsamen Gehäuse (16) angeordnet sind.

16. Batterie nach einem der Ansprüche 1 bis 15, dadurch gekennzeichnet, daß als elektrische Verbindung zwischen dem Pol (4) und dem Stecker (6) oder der Buchse der elektrischen Kabelsteckverbindung sowie gegebenenfalls der Metallhülse (15) ein im Batteriegehäuse (1) eingebetteter Metallkörper (17) vorgesehen ist, in dem die Metallhülse (15) gegebenenfalls eingebettet ist.

17. Batterie nach Anspruch 16, dadurch gekennzeichnet, daß der Metallkörper (17) mit dem Pol (4) verschweißt ist.

18. Batterie nach einem der Ansprüche 1 bis 17, dadurch gekennzeichnet, daß der Stecker (6) oder die Buchse der elektrischen Kabelsteckverbindung ein vorgefertigtes Stecker- oder Buchsenbauteil (26) ist, das in das Batteriegehäuse (1) unter Herstellung der elektrischen Verbindung zum Pol (4) einsetzbar ist.

19. Batterie nach Anspruch 18, dadurch gekennzeichnet, daß für die Herstellung der elektrischen Verbindung im Batteriegehäuse (1) ein mit dem jeweiligen Pol (4) elektrisch verbundener elektrischer Kontaktstift (32) fest angeordnet ist und das vorgefertigte Stecker- oder Buchsenbauteil (26) eine dazu korrespondierende elektrische Kontaktbuchse (28) aufweist.

20. Batterie nach Anspruch 18 oder 20, dadurch gekennzeichnet, daß zwischen dem Batteriegehäuse (1) und dem vorgefertigten Stecker- oder Buchsenbauteil (26) eine Rasteinrichtung (Klemmbügel 30) angeordnet ist.

21. Batterie nach Anspruch 1, dadurch gekennzeichnet, daß der elektrische Anschluß durch einen mit dem Pol elektrisch verbundenen Draht gebildet ist, auf dem einzelne mit ihm elektrisch verbundene Stecker (6) oder Buchsen des elektrischen Anschlusses für die Kontaktierung jeweils eines Anschlußkabels angeordnet sind.

22. Batterie nach Anspruch 21, dadurch gekennzeichnet, daß mehrere der Einzelstecker oder Einzelbuchsen zu einer Baugruppe zusammengefaßt sind.

23. Batterie nach Anspruch 21 oder 22, dadurch gekennzeichnet, daß der Draht ein Runddraht insbesondere aus Messing ist.

24. Batterie nach einem der Ansprüche 21 bis 20, dadurch gekennzeichnet, daß der Pol (4) eine Bohrung aufweist, in die der Draht für die elektrische Verbindung hineingesteckt ist.

25. Batterie nach einem der Ansprüche 21 bis 24, dadurch gekennzeichnet, daß die einzelnen Stecker (6) oder Buchsen jeweils eine Bohrung aufweisen, mittels denen sie auf den Draht hintereinander aufgesteckt sind.

26. Batterie nach Anspruch 25, dadurch gekennzeichnet, daß für die Positionierung der einzelnen Stecker (6) oder Buchsen auf dem Draht eine Zentrierplatte vorgesehen ist.

27. Batterie nach einem der Ansprüche 21 bis 26, dadurch gekennzeichnet, daß der Draht mit seinen Steckern (6) oder Buchsen im Kunststoff des Batteriegehäuses (1), insbesondere in dessen Deckel (3) eingebettet ist.

28. Batterie nach Anspruch 27, dadurch gekennzeichnet, daß die Stecker (6) oder Buchsen im im Kunststoff eingebetteten Bereich eine unrunde Außenkontur aufweisen.

29. Batterie nach einem der Ansprüche 21 bis 28, dadurch gekennzeichnet, daß die Stecker (6) oder Buchsen Drehteile insbesondere aus Rundmessing sind.

30. Batterie nach einem der Ansprüche 21 bis 29, dadurch gekennzeichnet, daß die Stecker (6) ein Schraubgewinde für die Kontaktierung des Anschlußkabels aufweisen.

## Claims

1. Battery, in particular starter battery for motor vehicles, with a battery housing (1) through which the terminals (4) of the battery extend to the outside, wherein the terminals (4) in each case comprise several electrical connections for a connecting cable, which are electrically connected to the terminal (4), characterised in that the electrical connections are formed by a plug (6) or socket of an electrical plug-in cable connection, comprising several contacts (7), wherein the plug (6) or the socket of this electrical plug-in cable connection is integrated in the battery housing (1) and rigidly connected.

2. Battery according to claim 1, characterised in that the plug (6) or socket of the electrical plug-in cable connection is embedded in the plastic of the battery housing (1).

3. Battery according to either of claims 1 to 2, wherein the battery housing (1) comprises a cover (3), characterised in that the plug (6) or socket of the electrical plug-in cable connection, in the region of one of the upper edges (5) of the battery housing (1), is rigidly integrated in the cover (3).

4. Battery according to either of claims 1 to 2, characterised in that the plug (6) or socket of the electrical plug-in cable connection is rigidly integrated in a side wall (19) of the battery housing (1).

5. Battery according to claim 4, characterised in that the side wall (19) of the battery housing (1) comprises a projecting, integrally formed receiving housing (20) in which the plug (6) or socket of the electrical plug-in cable connection can be inserted and fixed therein.

6. Battery according to any of claims 1 to 5, characterised in that a common plug (6) or a common socket of the electrical plug-in cable connection is provided for both terminals of the battery.

7. Battery according to any of claims 1 to 6, characterised in that the electrical connection between the terminal (4) and the plug (6) or socket of the electrical plug-in cable connection is formed by a cable or a ribbon cable (8).

8. Battery according to claim 7, characterised in that the end of the cable or ribbon cable (8) associated with the terminal (4) is provided with a fastening element (10) which is fastened to the cylindrical peripheral wall of the terminal (4) and of matching arcuate shape, wherein the terminal (4) comprises a recess (11) matching the fastening element (10) for receipt thereof.

9. Battery according to claim 7, characterised in that the end of the cable or ribbon cable (8) associated with the terminal (4) comprises a solid metal connecting piece (13) which is fitted on the terminal (4) and welded thereto.

10. Battery according to claim 9, characterised in that between the battery housing (1) and the terminal (4) is arranged a metal terminal bushing (12) which surrounds the latter and is also connected in form-locking relationship to the battery housing (1) and on which the metal connecting piece (13) is fitted, and wherein the terminal (4), the terminal bushing (12) and also the connecting piece (13) are welded together.

11. Battery according to any of claims 1 to 6, characterised in that the electrical connection between the terminal (4) and the plug (6) or socket of the electrical plug-in cable connection is formed by a metal plate (22).

12. Battery according to any of claims 1 to 11, characterised in that the electrical connection between the terminal (4) and the plug (6) or socket of the electrical plug-in cable connection is embedded in the plastic of the battery housing (1).

13. Battery according to any of claims 1 to 11, characterised in that the electrical connection between the terminal (4) and the plug (6) or socket of the electrical plug-in cable connection is laid in the battery housing (1) and fixed there.

14. Starter battery for motor vehicles according to any of claims 1 to 13, characterised in that, in addition to the plug (6) or socket of the electrical plug-in cable connection, a metal bushing (15) is provided for electrical contacting of a starter cable for the motor vehicle.

15. Starter battery according to claim 14, characterised in that the plug (6) or socket of the electrical plug-in cable connection as well as the metal bushing (15) for the starter cable are arranged in a common housing (16).

16. Battery according to any of claims 1 to 15, characterised in that as the electrical connection between the terminal (4) and the plug (6) or socket of the electrical plug-in cable connection as well as, if occasion arises, the metal bushing (15), a metal body (17) is provided which is embedded in the battery housing (1) and in which the metal bushing (15) is embedded if occasion arises.

17. Battery according to claim 16, characterised in that the metal body (17) is welded to the terminal (4).

18. Battery according to any of claims 1 to 17, characterised in that the plug (6) or socket of the electrical plug-in cable connection is a prefabricated plug or socket component (26) which can be inserted in the battery housing (1), making the electrical connection to the terminal (4).

19. Battery according to claim 18, characterised in that, for making the electrical connection, in the battery housing (1) is rigidly arranged an electrical contact pin (32) electrically connected to the respective terminal (4), and the prefabricated plug or socket component (26) comprises an electrical contact socket (28) matching it.

20. Battery according to claim 18 or 20, characterised in that between the battery housing (1) and the prefabricated plug or socket component (26) is arranged a latching device (clamping strap 30).

21. Battery according to claim 1, characterised in that the electrical connection is formed by a wire which is electrically connected to the terminal and on which are arranged individual plugs (6) or sockets of the electrical connection electrically connected thereto for contacting a connecting cable each.

22. Battery according to claim 21, characterised in that several of the individual plugs or individual sockets are combined into a subassembly.

23. Battery according to claim 21 or 22, characterised in that the wire is a round wire particularly made of brass.

24. Battery according to any of claims 21 to 23, characterised in that the terminal (4) comprises a bore in which the wire for the electrical connection is inserted.

25. Battery according to any of claims 21 to 24, characterised in that the individual plugs (6) or sockets each comprise a bore by means of which they are fitted on the wire-one behind the other.

26. Battery according to claim 25, characterised in that a centring plate is provided for positioning the individual plugs (6) or sockets on the wire.

27. Battery according to any of claims 21 or 26, characterised in that the wire with its plugs (6) or sockets is embedded in the plastic of the battery housing (1), particularly in the cover (3) thereof.

28. Battery according to claim 27, characterised in that the plugs (6) or sockets in the region embedded in the plastic have a non-round outer contour.

29. Battery according to any of claims 21 to 28, characterised in that the plugs (6) or sockets are turned parts particularly of round brass.

30. Battery according to any of claims 21 to 29, characterised in that the plugs (6) comprise a screw thread for contacting of the connecting cable.

## Revendications

1. Batterie, en particulier batterie de démarrage pour véhicules automobiles, comprenant un bac (1) que les bornes (4) de la batterie traversent vers l'extérieur, les bornes (4) comportant chacune plusieurs connexions électriques qui y sont reliées électriquement et qui correspondent à un câble de raccordement, caractérisée en ce que les connexions électriques sont formées par un connecteur (6) ou une douille à plusieurs contacts d'une liaison électrique par câble enfichable, le connecteur (6) ou la douille de cette liaison électrique par câble enfichable étant intégré et solidarisé au bac (1) de la batterie.

2. Batterie selon la revendication 1, caractérisée en ce que le connecteur (6) ou la douille de la liaison électrique par câble enfichable est encastré dans la matière plastique du bac (1) de la batterie.

3. Batterie selon l'une des revendications 1 et 2, le bac (1) de la batterie comportant un couvercle (3), caractérisée en ce que le connecteur (6) ou la douille de la liaison électrique par câble enfichable est intégré à demeure dans le couvercle (3), dans la zone de l'un des bords supérieurs (5) du bac (1) de la batterie.

4. Batterie selon l'une des revendications 1 et 2, caractérisée en ce que le connecteur (6) ou la douille de la liaison électrique par câble enfichable est intégré à demeure dans une paroi latérale (19) du bac (1) de la batterie.

5. Batterie selon la revendication 4, caractérisée en ce que la paroi latérale (19) du bac (1) de la batterie présente un boîtier de logement (20) moulé en saillie, dans lequel le connecteur (6) ou la douille de la liaison électrique par câble enfichable peut être logé et immobilisé.

6. Batterie selon l'une des revendications 1 à 5, caractérisée en ce qu'un connecteur commun (6) ou une douille commune de la liaison électrique par câble enfichable est prévu pour les deux bornes (4) de la batterie.

7. Batterie selon l'une des revendications 1 à 6, caractérisée en ce que la liaison électrique entre la borne (4) et le connecteur (6) ou la douille de la liaison électrique par câble enfichable est formée par un câble ou par un câble-ruban (8).

8. Batterie selon la revendication 7, caractérisée en ce que l'extrémité du câble ou du câble-ruban (8) associée à la borne (4) est munie d'un élément de fixation (10) fixé contre la paroi périphérique cylindrique de la borne (4) et conçu avec un cintrage correspondant, la borne (4) comportant une encoche (1) qui correspond à l'élément de fixation (10) et qui sert à le loger.

9. Batterie selon la revendication 7, caractérisée en ce que l'extrémité du câble ou du câble-ruban (8) associée à la borne (4) comporte une pièce de connexion massive (13) en métal, qui est emmanchée sur la borne (4) et y est soudée.

10. Batterie selon la revendication 9, caractérisée en ce qu'il est prévu, entre le bac (1) de la batterie et la borne (4), un manchon métallique de passage de borne (12) qui entoure ladite borne (4) et est relié par complémentarité de formes au bac (1) de la batterie, et sur lequel la pièce de connexion (13) en métal est emmanchée, la borne (4), le manchon de passage de borne (12) ainsi que la pièce de connexion (13) étant soudés ensemble.

11. Batterie selon l'une des revendications 1 à 6, caractérisée en ce que la liaison électrique entre la borne (4) et le connecteur (6) ou la douille de la liaison électrique par câble enfichable est formée par une plaque métallique (22).

12. Batterie selon l'une des revendications 1 à 11, caractérisée en ce que la liaison électrique entre la borne (4) et le connecteur (6) ou la douille de la liaison électrique par câble enfichable est encastrée dans la matière plastique du bac (1) de la batterie.

13. Batterie selon l'une des revendications 1 à 11, caractérisée en ce que la liaison électrique entre la borne (4) et le connecteur (6) ou la douille de la liaison électrique par câble enfichable est insérée dans le bac (1) de la batterie et y est fixée.

14. Batterie de démarrage pour véhicules automobiles selon l'une des revendications 1 à 13, caractérisée en ce qu'en plus du connecteur (6) ou de la douille de la liaison électrique par câble enfichable, il est prévu un manchon métallique (15) pour la mise en contact électrique d'un câble de démarreur du véhicule automobile.

15. Batterie de démarrage selon la revendication 14, caractérisée en ce que le connecteur (6) ou la douille de la liaison électrique par câble enfichable ainsi que le manchon métallique (15) destiné au câble du démarreur sont disposés dans un boîtier commun (16).

16. Batterie selon l'une des revendications 1 à 15, caractérisée en ce qu'il est prévu, comme liaison électrique entre la borne (4) et le connecteur (6) ou la douille de la liaison électrique par câble enfichable ainsi que, le cas échéant, le manchon métallique (15), un corps métallique (17) qui est encastré dans le bac (1) de la batterie et dans lequel, le cas échéant, le manchon métallique (15) est encastré.

17. Batterie selon la-revendication 16, caractérisée en ce que le corps métallique (17) est soudé à la borne (4).

18. Batterie selon, l'une des revendications 1 à 17, caractérisée en ce que le connecteur (6) ou la douille de la liaison électrique par câble enfichable est un composant préfabriqué formant connecteur ou douille (26) qui peut être mis en place dans le bac (1) de la batterie en créant la liaison électrique avec la borne (4).

19. Batterie selon la revendication 18, caractérisée en ce que, pour réaliser la liaison électrique, une broche de contact électrique (32) reliée électriquement à la borne correspondante (4) est implantée dans le bac (1) de la batterie, et le composant préfabriqué formant connecteur ou douille (26) comporte une douille de contact électrique correspondante (28).

20. Batterie selon la revendication 18 ou 20, caractérisée en ce qu'un dispositif de crantage (étrier de serrage 30) est disposé entre le bac (1) de la batterie et le composant préfabriqué formant connecteur ou douille (26).

21. Batterie selon la revendication 1, caractérisée en ce que le moyen de connexion électrique est formé par un fil métallique qui est relié électriquement à la borne et sur lequel sont implantés différents connecteurs (6) ou douilles de connexion électrique qui y sont reliés électriquement et qui créent le contact avec chacun des câbles de raccordement.

22. Batterie selon la revendication 21, caractérisée en ce que plusieurs des connecteurs individuels ou des douilles individuelles sont réunis sous la forme d'un groupe structurel.

23. Batterie selon la revendication 21 ou 22, caractérisée en ce que le fil métallique est un fil à section circulaire, en particulier en laiton.

24. Batterie selon l'une des revendications 21 à 23, caractérisée en ce que la borne (4) comporte un perçage, dans lequel est enfilé le fil métallique servant à la liaison électrique.

25. Batterie selon l'une des revendications 21 à 24, caractérisée en ce que les différents connecteurs (6) ou douilles comportent chacun un perçage qui permet de les enfiler les uns derrière les autres sur le fil métallique.

26. Batterie selon la revendication 25, caractérisée en ce qu'il est prévu une plaque de centrage pour positionner les différents connecteurs (6) ou douilles sur le fil.

27. Batterie selon l'une des revendications 21 à 26, caractérisée en ce que le fil métallique muni de ses connecteurs (6) ou de ses douilles est encastré dans la matière plastique du bac (1) de la batterie, en particulier dans son couvercle (3).

28. Batterie selon la revendication 27, caractérisée en ce que les connecteurs (6) ou les douilles présentent, dans la zone noyée dans la matière plastique, un contour extérieur non rond.

29. Batterie selon l'une des revendications 21 à 28, caractérisée en ce que les connecteurs (6) ou douilles sont des pièces tournées, en particulier en laiton à section circulaire.

30. Batterie selon l'une des revendications 21 à 29, caractérisée en ce que les connecteurs (6) comportent un filetage pour la mise en contact du câble de raccordement.
